# FASCICULE DE BREVET EUROPEEN

(11) **EP 2 223 475 B1**
(45) Date de publication et mention de la délivrance du brevet: **22.06.2011**
(21) Numéro de dépôt: 08857055.1
(22) Date de dépôt: 03.12.2008
(51) Int. Cl.: H04L 12/56

(54) **PROCEDE PERMETTANT DE MAINTENIR A JOUR LES TABLES DE ROUTAGE D'UN RESEAU DE DISSEMINATION INSTABLE**
VERFAHREN ZUM AKTUALISIERTHALTEN DER ROUTINGTABELLEN EINES INSTABILEN VERBREITUNGSNETZWERKS
METHOD FOR KEEPING THE ROUTING TABLES OF AN UNSTABLE DISSEMINATION NETWORK UP TO DATE

(30) Priorité: 05.12.2007 FR 0708454
(43) Date de publication de la demande: 01.09.2010
(73) Titulaire: THALES, 92200 Neuilly-sur-Seine (FR)
(72) Inventeur: GEORGEL, Dominique, F-95150 Taverny (FR); IOZELLI, Laurent, F-75005 Paris (FR)
(74) Mandataire: Lucas, Laurent Jacques
(86) Numéro de dépôt international: PCT/EP2008/066689
(87) Numéro de publication internationale: WO 2009/071571

(56) Documents cités:
- EP-A- 1 511 234
- STANZE O ET AL: "Mobility adaptive self-parameterization of routing protocols for mobile ad hoc networks" WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, 1 janvier 2006 (2006-01-01), pages 276-281, XP031102100 ISBN: 978-1-4244-0269-4

## Description

### Domaine technique :

La présente invention concerne un procédé permettant de maintenir à jour les tables de routage des noeuds d'un réseau de dissémination instable, les noeuds rejoignant ou quittant le réseau de manière imprévisible. Elle s'applique notamment dans le domaine des réseaux étendus hétérogènes, par exemple les réseaux militaires.

### Art antérieur et problème technique :

Les réseaux de dissémination de données diffèrent des réseaux de messagerie en ce que les premiers sont centrés sur des données qu'ils distribuent à des utilisateurs alors que les seconds sont centrés sur des messages qu'ils distribuent à des destinataires. Bien souvent, dans un réseau de dissémination de données, chaque consommateur de données est intéressé par un ou plusieurs types de données en particulier. Il souhaite donc recevoir toutes les données de ce ou de ces types qui transitent sur le réseau. Pour cela, il s'abonne aux types de données qui l'intéressent, c'est pourquoi on dit qu'il est abonné ou « subscriber » selon la terminologie anglo-saxonne. Un abonné ne connaît pas dans le réseau le ou les producteurs des données qu'il consomme, on dit également qu'il n'en connaît pas l'éditeur ou le « publisher » selon la terminologie anglo-saxonne. De même, l'éditeur ne connaît pas les abonnés aux types de données qu'il produit. Ainsi, aucune relation n'est établie directement entre les producteurs et les consommateurs, qui s'annoncent indépendamment à des noeuds formant le réseau. C'est pourquoi on dit que le couplage entre un abonné et un éditeur dans un réseau de dissémination est lâche. A contrario, dans un réseau de messagerie, l'émetteur et le récepteur d'un message se connaissent mutuellement. C'est pourquoi on dit que le couplage est étroit.

Les réseaux de dissémination de données sont plus particulièrement utilisés dans les systèmes militaires. Ces systèmes se caractérisent d'une part par l'hétérogénéité des applications et des moyens de communication mis en oeuvre. Il peut s'agir par exemple d'un réseau filaire reliant des plates-formes fixes au sol, ce réseau filaire étant lui-même connecté avec des réseaux hertziens reliant des plate-formes mobiles, qu'elles soient roulantes, navales ou aéroportées. Cette hétérogénéité limite les performances du réseau en termes de bande passante, de latence et de débit. Ces systèmes se caractérisent d'autre part par l'instabilité de la topologie du réseau. En effet, chaque plate-forme embarquant un noeud du réseau, les noeuds sur plate-forme mobile sont susceptibles de rejoindre ou de quitter le réseau à tout moment en fonction des contraintes opérationnelles sur le terrain. Des applications peuvent également se déplacer d'un noeud de dissémination à un autre, par exemple dans le cas de bascule opérationnelle.. Cette instabilité affecte les moyens de communication. Les tables de routage, couramment désignées par l'expression anglaise « forwarding tables » et qui indiquent localement à un noeud vers quels autres noeuds il doit éventuellement transférer des données qu'il reçoit, doivent en permanence être mises à jour au gré des modifications dans la topologie du réseau. Ces contraintes d'hétérogénéité des moyens de communication et d'instabilité de la topologie du réseau doivent tout particulièrement être prises en compte pour disséminer efficacement les données tout en gardant un rapport signalisation / charge utile raisonnable.

Pour tenter de surmonter les difficultés posées par l'hétérogénéité des échanges, des technologies issues du web basées notamment sur le protocole SOAP (« Simple Object Access Protocol ») ont été introduites dans les systèmes militaires. Peuvent être cités par exemple le langage WSDL (« Web Service Description Language ») pour décrire les interfaces d'accès à un service ou encore le standard WS-Addressing (« Web Service Addressing ») pour spécifier le format d'adressage des messages ou encore le standard WS-Security (« Web Service Security ») pour sécuriser les échanges. Ces standards sont eux-même définis à partir d'autres standards comme le langage XML (« eXtensible Markup Language »). Il s'agit en fait d'utiliser les standards du web pour définir un cadre d'interopérabilité entre les noeuds.

Pour surmonter les difficultés posées par l'instabilité de la topologie de dissémination, le protocole RTPS (« Real-Time Publish-Subscribe ») est la piste la plus prometteuse. RTPS est le protocole d'interopérabilité du standard DDS (« Data Distribution Services »). Proposé par l'OMG (« Object Management Group »), DDS et RTPS constituent en effet une des propositions de standard les plus abouties. Le standard DDS propose de définir la topologie de dissémination des données en définissant initialement des noeuds DDS. Chaque noeud DDS utilise par la suite le protocole RTPS pour d'abord découvrir les autres noeuds et pour ensuite découvrir les productions et les consommations de données déclarées dynamiquement sur ces noeuds. Pour cela, des messages dits de « signalisation , sont échangés entre les noeuds DDS. Cependant, RTPS repose sur le postulat que le réseau support est un réseau local de type LAN (« Local Area Network ») utilisant le protocole IP (« Internet Protocol »), ce qui sous-entend notamment qu'il est homogène et stable, et que sa bande passante est constante et quasiment illimitée. Et il s'avère effectivement que RTPS n'est pas adapté à un réseau étendu de type WAN hétérogène (« Wide Area Network »), comme un système militaire. RTPS définit un protocole de découverte des noeuds du réseau de dissémination appelé SDP (« Simple Discovery Protocol ») qui n'est déployable que sur des réseaux type LAN de petite ou moyenne taille. Le principe repose sur l'envoi périodique d'informations à une liste statique de noeuds destinataires, sans historique ni tolérance aux fautes. De plus, les mécanismes d'échange d'informations concernant les abonnements DDS entre les noeuds reposent sur l'envoi de messages à cette même liste de noeuds sur événement, un événement étant un ajout, une suppression ou une modification d'abonnement. Cela peut conduire à une explosion du nombre de messages de signalisation échangés, par exemple dans le cas d'un réseau de dissémination instable où de nombreuses applications entrent et sortent du réseau. C'est pourquoi on dit encore que RTPS « ne supporte pas la mise à l'échelle » des WAN hétérogènes ou encore qu'il n'est pas « scalable » selon l'expression anglo-saxonne.

Plus généralement dans la suite du présent document, les termes « réseau » et « réseau de dissémination » pourront être employés indifféremment. Le réseau de dissémination représente l'ensemble des noeuds de dissémination déployés et les moyens de communication qu'ils utilisent pour communiquer.

### Reprise des revendications :

L'invention a notamment pour but de maintenir à jour les tables de routage dans un réseau de dissémination dont la topologie est instable. Afin de diminuer le temps de détection des désynchronisations tout en limitant la quantité des échanges de signalisation, l'invention propose notamment une solution pour détecter beaucoup de désynchronisations avec un seul message, en faisant collaborer les noeuds entre eux. A cet effet, l'invention a pour objet un procédé permettant de maintenir à jour les tables de routage des noeuds d'un réseau de dissémination instable, les noeuds rejoignant ou quittant ce réseau de manière imprévisible. Un noeud envoie périodiquement un message de synchronisation à tous les autres noeuds distants, la période d'envoi d'un message de synchronisation à tous les autres noeuds distants augmentant lorsque le réseau tend à se stabiliser, les noeuds distants étant tous synchronisés et la table de routage locale n'évoluant pas. Un noeud envoie exceptionnellement un message de synchronisation à un autre noeud distant en particulier lorsque ledit autre noeud est désynchronisé.

Par exemple, un message de synchronisation peut contenir des informations permettant de déduire la version la plus récente de la table locale du noeud ainsi que des informations permettant de déduire les versions des tables des autres noeuds distants connues par le noeud. Ainsi, un message de synchronisation peut être envoyé exceptionnellement à un autre noeud distant lorsque ledit autre noeud a précédemment envoyé un message de synchronisation permettant de déduire qu'il ne connaissait pas la version la plus récente de la table locale du noeud.

Avantageusement, avant d'envoyer exceptionnellement un message de synchronisation à un autre noeud distant, le noeud attend un délai donné après réception du message de synchronisation envoyé par ledit autre noeud et/ou attend de recevoir un message confirmant la désynchronisation.

Le réseau peut être hétérogène, les noeuds de dissémination utilisant des moyens de communication différents.

Avantageusement, pour envoyer exceptionnellement un message de synchronisation à un autre noeud distant, un noeud peut d'une part envoyer le message de synchronisation à des groupes de noeuds distants obligatoires dont ledit autre noeud fait partie, tous les noeuds desdits groupes recevant obligatoirement le message de synchronisation. Le noeud peut d'autre part envoyer le message de synchronisation à un groupe de noeuds distants optionnels, un noeud dudit groupe ne recevant le message de synchronisation que s'il se trouve sur un chemin menant à un noeud obligatoire.

Dans un mode de réalisation, un noeud rejoignant le réseau peut s'affilier à un groupe formé par tous les noeuds de ce réseau et peut s'affilier à des groupes formés par les noeuds participant à un même sous réseau que lui. Il faut préciser que la fonctionnalité d'affiliation à un groupe n'est pas fournie par le réseau de dissémination, mais par des routeurs du réseau sous-jacent. Les fonctions offertes par ces routeurs sont détaillées par la suite. Il faut préciser également que, dans la présente demande, le terme « sous-réseau » ne peut en aucun cas être limité à un sous-réseau IP. Des exemples de sous réseaux sont donnés par la suite. Un noeud quittant le réseau peut se désaffilier du groupe formé par tous les noeuds du réseau et peut se désaffilier des groupes formés par les noeuds participant à un même sous réseau que lui. Par exemple, les groupes de noeuds distants obligatoires peuvent être les groupes formés par les noeuds participant à un même sous réseau que le noeud. Le groupe de noeuds distants optionnels peut être le groupe formé par tous les noeuds du réseau.

Par exemple, le message de synchronisation envoyé périodiquement à tous les autres noeuds distants peut contenir la table locale du noeud accompagnée d'un numéro de version ainsi que des identifiants des autres noeuds distants connus par le noeud, accompagnés des numéros de versions de leur table locale. Le message de synchronisation envoyé exceptionnellement à un autre noeud distant peut quant à lui contenir un numéro de version de la table locale du noeud ainsi que des informations permettant de déduire, à partir de la version de la table locale du noeud dont le numéro est contenu dans le message, la version la plus récente de la table locale du noeud. Avantageusement, le numéro de version de la table locale du noeud peut être celui de la version précédant la version la plus récente.

Les informations concernant les tables de routage contenues dans un message de synchronisation peuvent être codées numériquement, de sorte à diminuer la quantité totale d'information formant le message. Les informations de routage peuvent être représentées à partir de canaux, chaque canal étant la racine d'une arborescence de flux. Des codes numériques peuvent être associés dynamiquement à ces canaux / flux. La codification numérique peut être rémanente pendant une durée donnée, de sorte à limiter les créations / suppressions de codes malgré l'instabilité du réseau. Dans le cas où le réseau est suffisamment stable, la codification numérique peut être prédéfinie. Avantageusement, tous les messages de charge utile transitant sur le réseau peuvent avoir leurs informations de routage codées sous la même forme que dans les messages de synchronisation, de sorte à diminuer la quantité totale d'information formant les messages. De plus, les messages de synchronisation peuvent être encodés conformément à la norme PER ASN1.

### Avantages :

L'invention a encore pour principaux avantages qu'elle permet, en créant simplement dans un réseau de dissémination de données un type de données dédié à la signalisation, d'unifier la signalisation du réseau avec la dissémination des données utiles. De cette façon, l'invention peut exploiter l'infrastructure existante du réseau de dissémination : elle peut utiliser par exemple des structures hiérarchisées en canaux et en flux déjà à disposition, comme ce sera détaillé par la suite. L'invention ne nécessite donc pas de mettre en place une infrastructure dédiée à la signalisation. D'autre part, la signalisation selon l'invention peut bénéficier de tous les avantages et services offerts par le réseau sous-jacent existant, sur lequel les noeuds de dissémination sont déployés. Par exemple, même si des chemins multiples sont disponibles pour rejoindre un même ensemble de noeuds distants, le trafic de signalisation est optimisé en fonction de la topologie du réseau et de la localisation des producteurs et des consommateurs. Divers services sont également à disposition, par exemple des services de gestion des droits, de sécurisation des échanges, de compression des données ou encore des services liés à la qualité de service (« Quality of Service » ou QoS). Les services de QoS permettent notamment de rendre prioritaires les échanges de signalisation ou de leur allouer de la bande passante. Tout ceci procure des avantages en coût qui ne sont pas négligeables, puisqu'il n'est pas nécessaire de redévelopper de tels services. Et il faut noter que cette utilisation d'un réseau de dissémination de données pour échanger des informations de signalisation ne se fait pas au détriment du débit disponible pour disséminer les données utiles. Bien au contraire, les services selon la présente invention cités précédemment pour limiter le volume des échanges de signalisation permettent avantageusement de diminuer aussi le volume des échanges de données utiles. Ainsi, les capacités du réseau à disséminer les données utiles ne sont pas diminuées. Dans certains cas, ses capacités à disséminer les données utiles peuvent même être améliorées par la présente invention ! Il faut noter également que la signalisation selon l'invention est déployable sur des réseaux autres que des réseaux IP, notamment des réseaux sans fil limités en bande passante, de type UHF, VHF ou HF, et sur toute combinaison de ces types de réseaux.

### Description des figures :

D'autres caractéristiques et avantages de l'invention apparaîtront à l'aide de la description qui suit faite en regard de dessins annexés qui représentent :
   - la figure 1, par un synoptique, un exemple d'architecture réseau permettant de mettre en oeuvre le procédé selon la présente invention ;
   - la figure 2, par un diagramme, un exemple de structure de noeud permettant de mettre en oeuvre le procédé selon la présente invention.

### Description de l'invention à partir des figures :

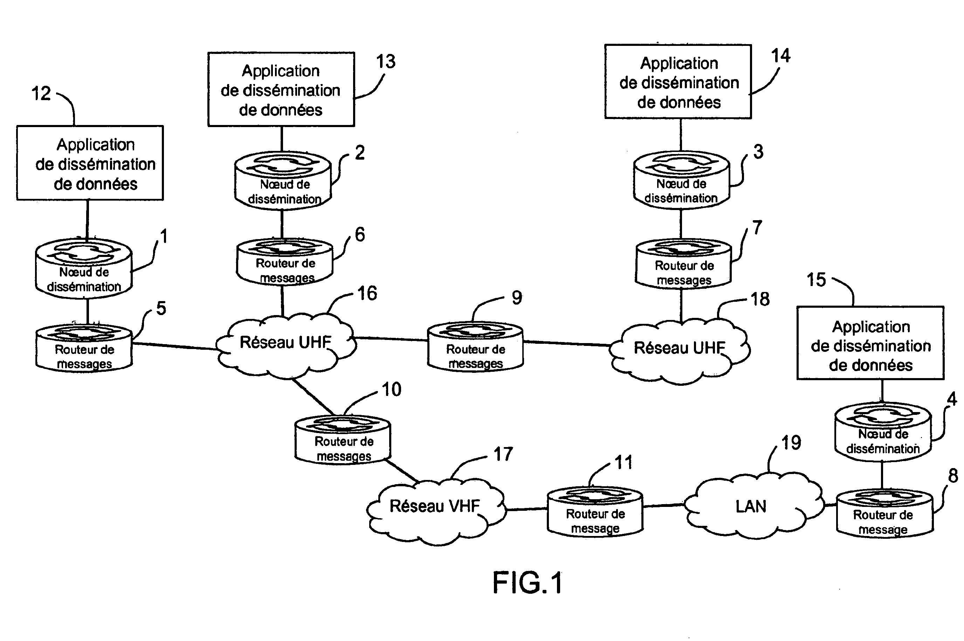

La figure 1 illustre par un synoptique un exemple d'architecture réseau permettant de mettre en oeuvre le procédé selon la présente invention dans un réseau de dissémination de données hautement distribué, afin d'y entretenir des tables de routage. Des noeuds de dissémination 1, 2, 3 et 4 forment le réseau. Le procédé de signalisation selon l'invention est mis en place au niveau des noeuds 1, 2, 3 et 4, qui offrent déjà des services de dissémination de données à des applications 12, 13, 14 et 15 respectivement. Pour cela, les noeuds 1, 2, 3 et 4 sont les usagers d'un réseau de distribution de messages constitué par des routeurs de messages 5, 6, 7, 8, 9, 10 et 11. Les routeurs 5, 6, 7, 8, 9, 10 et 11 sont utilisés pour transmettre la signalisation entre les noeuds 1, 2, 3 et 4, ainsi que les messages de charge utile. Ils font l'objet d'une autre demande de brevet déposée par la demanderesse. Les noeuds de dissémination 1, 2, 3 et 4 sont utilisateurs des routeurs 5, 6, 7, 8, 9, 10 et 11, qui proposent des services pour assurer l'acheminement de messages sur le réseau de dissémination, aussi bien des messages de charge utile que des messages de signalisation. Les routeurs 5, 6, 7, 8, 9, 10 et 11 prennent notamment en charge l'optimisation de l'acheminement de la signalisation. Ils permettent notamment d'attribuer de la QoS à la signalisation, de choisir le meilleur chemin pour transférer la signalisation, d'acheminer la signalisation sur des réseaux non IP ou encore d'acheminer la signalisation sur des réseaux hétérogènes en technologies et contraints en bande passante. Ils prennent également en charge la définition de groupes de noeuds destinataires optionnels et de groupes de noeuds destinataires obligatoires, ainsi que l'affiliation à ces groupes de noeuds. Ce mécanisme de groupes de noeuds destinataires peut être particulièrement utile lorsqu'un noeud rejoint la grille. En effet, il peut avantageusement permettre de créer un « groupe des noeuds » dédié pour représenter l'ensemble des noeuds déployés dans la grille. Les informations échangées entre les membres du groupe des noeuds sont des informations de signalisation. Par la suite, on parlera indifféremment de « messages de signalisation » ou même simplement de « signalisation » pour qualifier les informations de signalisation échangées entre les noeuds. Avantageusement, les noeuds 1, 2, 3 et 4 peuvent s'affilier ou se désaffilier dudit groupe des noeuds pour respectivement rejoindre ou se retirer de la grille. Un message envoyé au groupe est transmis à l'ensemble des noeuds affiliés à ce groupe en utilisant des modes d'échange offerts par les routeurs 5, 6, 7, 8, 9, 10 et 11, du type point à multipoints ou multi-cast en fonction des possibilités des réseaux déployés, éventuellement en combinant les deux modes. Comme ce sera détaillé par la suite, les routeurs 5, 6, 7, 8, 9, 10 et 11 peuvent avantageusement permettre d'acheminer la signalisation en précisant des noeuds destinataires obligatoires et des noeuds destinataires optionnels, l'objectif étant d'acheminer la signalisation aux noeuds optionnels s'ils sont situés sur les chemins utilisés pour joindre les noeuds obligatoires. En exploitant habilement ces mécanismes mis à disposition par les routeurs 5, 6, 7, 8, 9, 10 et 11, comme ce sera détaillé par la suite, le procédé selon la présente invention améliore considérablement le mécanisme classique dit « des hellos ».

Chacun des noeuds 1, 2, 3 et 4 de la grille de dissémination transmet aux noeuds distants les informations relatives aux productions et aux consommations de données réalisées par l'application 12, 13, 14 ou 15 qui lui est respectivement attachée. Les productions et les consommations sont décrites par des noms de canaux et des noms de flux structurés hiérarchiquement, chaque canal étant la racine d'une arborescence de flux. Un canal est identifié par son nom. De même, un flux est identifié par son nom. Par exemple, un canal peut être nommé « potentiel ». Un premier flux dans ce canal peut être nommé « armement » et un deuxième flux dans ce canal peut être nommé « motricité ». Un sous-flux dans ce deuxième flux peut être nommé « motricité/carburant », un autre sous-flux dans ce deuxième flux peut être nommé « motricité/état_moteur ». Il est à remarquer que la concaténation d'un nom de canal et d'un nom de flux est assimilable à un nom de « topic » dans le standard DDS. Il est à remarquer également que le nom d'un canal peut être assimilé à un espace de noms dans la proposition de standard WSBrokeredNotification. Une liste des canaux et des flux produits et consommés sur un noeud constitue la table de routage locale de ce noeud ou « forwarding table » selon l'expression anglo-saxonne. La table de routage locale contient toutes les informations sur les abonnements locaux. Elle doit être mise à jour sur arrivée ou sur départ d'applications, ou encore sur modification d'abonnements existants.

D'après le procédé selon la présente invention, la table de routage d'un noeud contient non seulement la table de routage locale, mais également les tables de routage locales de noeuds distants. Une table de routage locale est identifiée et versionnée, par exemple par la mise en place d'un compteur cyclique sur m bits où le nombre m est égal au logarithme en base 2 de la valeur maximum que peut prendre le compteur. Le noeud 1 peut incrémenter son compteur lors de la définition de nouvelles productions et/ou de nouvelles consommations par l'application 12. Il peut aussi incrémenter son compteur lors du retrait de productions et/ou consommations existantes par l'application 12. Avantageusement, le noeud 1 peut également comporter des mécanismes de temporisation ou de comptage pour regrouper un ensemble de modifications de productions/consommations. Par exemple, lorsqu'il détecte une modification de production/consommation, le noeud 1 peut armer un mécanisme de temporisation. Le mécanisme de temporisation lui permet d'attendre d'éventuelles autres productions/consommations qu'il serait en mesure de regrouper, afin de n'incrémenter qu'une seule fois le numéro de version de sa table de routage locale. La durée de temporisation peut être un paramètre de configuration. Le nombre m doit être choisi suffisamment grand pour qu'il n'y ait pas de confusion possible avec une ancienne table qui porterait un même numéro. Le nombre m doit également être dimensionné en rapport avec la durée de temporisation et le temps maximum pour détecter l'inaccessibilité d'un noeud. Par exemple, si la durée de temporisation est de 1 seconde et lé temps maximum de détection d'inaccessibilité de 1 heure, alors m est au moins égal à 12, car 12 bits au minimum sont nécessaires pour représenter 3600 changements de numéro de version. Afin de se protéger des risques de déni de service ou d'anomalies logicielles, le noeud 1 peut ajuster la durée de temporisation en fonction des changements dans le temps apportés par l'application 12 à la liste des productions/consommations. Il peut également se protéger d'une succession de déclarations/retraits pour les mêmes productions/consommations demandées par l'application 12.

Les informations de signalisation acheminées dans la grille peuvent être décrites avec le standard XML Schema défini par le W3C (« World Wide Web Consortium »). Afin d'optimiser le transfert des documents XML de signalisation ainsi générés, une première optimisation peut consister à utiliser un encodage efficace conforme à la norme ASN1 (« Abstract Syntax Notation number One »), comme le standard X.691 qui concerne les PER (« Packed Encoding Rules »). Afin de faire correspondre un schéma XML avec son équivalent ASN1, le standard X.694 proposé par l'ITU (« International Telecommunication Union ») peut être utilisé.

Comme explicité précédemment, l'exemple de système permettant de mettre en oeuvre l'invention et dont l'architecture est illustrée par la figure 1 prévoit un groupe des noeuds auquel les noeuds 1, 2, 3 et 4 peuvent avantageusement s'affilier pour rentrer dans la grille. L'identifiant du groupe des noeuds est connue des routeurs de messages 5, 6, 7, 8, 9, 10 et 11.

A partir du groupe des noeuds, le procédé selon la présente invention propose de mettre en place un mécanisme de « hellos », un « hello » étant un message émis par un noeud vers le groupe des noeuds. Les hellos sont émis périodiquement. Pour un noeud donné parmi 1, 2, 3 ou 4, la période d'envoi des hellos peut varier au cours du temps. Cette période est appelée période de cycle. Initialement, lorsque le noeud 1 par exemple s'affilie auprès du groupe des noeuds, il peut envoyer un premier hello vers le groupe. Ce hello peut ne contenir que la table locale du noeud 1 accompagnée de son numéro de version. Ensuite, des hellos sont envoyés périodiquement par le noeud 1. Ils peuvent alors contenir non seulement la table locale du noeud 1 accompagnée de son numéro de version, mais ils peuvent également contenir les identifiants et les numéros de version des tables de routage apprises des autres noeuds 2, 3 et 4 de la grille grâce à des hellos reçus par le noeud 1. Ainsi, si le noeud 2 reçoit un hello émis par le noeud 1, le noeud 2 est capable de détecter que le noeud 1 ne possède pas la dernière version de la table locale du noeud 2. Les noeuds 1, 2, 3 et 4 envoient et reçoivent des hellos en suivant les mêmes règles.

Par exemple, dans le cas où le noeud 1 constate que les noeuds distants 2, 3 et 4 possèdent la dernière version de sa table locale, alors il est inutile qu'il la leur transmette. Aussi, le procédé selon la présente invention propose que le noeud 1 ne place dans ses hellos que le seul numéro de version de sa table locale, le contenu de ladite table pouvant être omis.

Par exemple, dans le cas où le noeud 1 constate qu'un ou plusieurs noeuds distants parmi 2, 3 et 4 sont « partiellement » désynchronisés, par exemple qu'ils ne connaissent que l'avant dernière version de la table locale du noeud 1, le noeud 1 est en mesure de minimiser la quantité d'informations transmises dans le hello. Pour cela, le hello émis par le noeud 1 peut ne contenir que le numéro de l'avant-dernière version de la table locale du noeud 1 accompagnée des évolutions nécessaires pour constituer la dernière. Cette possibilité, appelée par la suite resynchronisation partielle, n'est utilisée que si le volume d'informations des évolutions apportées est inférieur au volume de la table locale.

Avantageusement, le noeud 1 peut également augmenter la période de cycle s'il ne constate aucune désynchronisation des autres noeuds 2, 3 et 4 depuis une certaine durée. En effet, le procédé selon la présente invention peut prévoir que la période de cycle peut être augmentée progressivement en fonction de la durée écoulée depuis la dernière resynchronisation.

Les hellos peuvent également être envoyés sur événement. Par exemple, le noeud 1 peut envoyer un hello en dehors des cycles d'émissions périodiques, immédiatement après de nouvelles déclarations de productions/consommations sur le noeud 1 par l'application 12 par exemple. Un tel hello immédiat est appelé « hello hors cycle ». La possibilité d'envoyer des hellos hors cycle peut dépendre d'un paramètre de configuration. Le nombre de hellos hors cycle qu'il est possible d'émettre entre deux cycles peut aussi être un paramètre de configuration. Par ailleurs, un hello hors cycle peut porter une synchronisation partielle, c'est-à-dire contenir le numéro de l'avant-dernière version de la table locale et les évolutions nécessaires pour constituer la dernière, ou complète, c'est-à-dire contenir toute la table locale.

Afin de limiter la quantité de hellos échangés, l'envoi d'un hello de re-synchronisation hors cycle peut être optionnel. En effet, le noeud 1 peut réaliser la re-synchronisation au prochain cycle seulement, mais en repositionnant la période de cycle à sa valeur minimale. Une raison pour cela peut être liée au fait que le noeud 1 a déjà effectué plusieurs re-synchronisations hors cycle. Une autre raison pour cela peut être que la proportion de noeuds perçus comme désynchronisés est importante, par exemple deux noeuds parmi les trois noeuds 2, 3 et 4 ou un nombre de noeuds donné en paramètre de configuration. Dans ce cas, en repositionnant la période de cycle à sa valeur minimale, c'est comme si le noeud 1 envoyait un hello hors cycle pour le groupe des noeuds.

Avant d'envoyer un hello hors cycle de re-synchronisation partielle à cause d'un premier noeud distant désynchronisé, par exemple le noeud 2, le noeud 1 peut attendre afin d'être sûr qu'une telle mesure sera efficace. En effet, un deuxième noeud distant désynchronisé peut ne pas être re-synchronisable avec un hello de re-synchronisation partielle car il ne possède même pas l'avant-dernière version de la table, par exemple le noeud 3. La durée d'attente peut être un paramètre de configuration.

Comme ce sera détaillé par la suite, dans le cas où le noeud 1 ne sait pas si le noeud 3 et le noeud 4 sont non re-synchronisables avec un hello de re-synchronisation partielle, le noeud 1 envoie un hello de resynchronisation partielle non seulement au noeud 2 perçu comme désynchronisé partiellement, mais également au groupe des noeuds, en précisant que la transmission au groupe des noeuds est optionnelle car le noeud 1 ne connaît pas leurs états. Le routeur 5 transmet alors le hello au noeud 2 vu comme désynchronisé et tente de transmettre le message aux noeuds 3 et 4 s'ils sont joignables par le même chemin. Dans le cas où le noeud 1 détecte que le noeud 3 est non re-synchronisable partiellement, le noeud 1 envoie un hello hors cycle contenant la totalité de sa table locale en appliquant la même technique que celle décrite précédemment pour une resynchronisation partielle hors cycle, c'est-à-dire en l'envoyant aussi au groupe des noeuds, en précisant que la transmission au groupe des noeuds est optionnelle. Par ce mécanisme, qui est détaillé par la suite, le procédé selon la présente invention améliore considérablement le mécanisme des hellos.

Dans le cas particulier où le noeud 1 apprend par un hello d'un noeud parmi 2, 3 ou 4 qu'un ensemble de noeuds n'était pas connu, c'est-à-dire que la grille était scindée en deux sous-grilles, alors il n'envoie aucun hello immédiat afin de ne pas provoquer une avalanche de re-synchronisations.

Par ailleurs, le noeud 1 peut détecter que le noeud 2 semble ne plus être en mesure de le joindre car il ne reçoit plus de hellos en provenance du noeud 2. La période à partir de laquelle le noeud 1 considère le noeud 2 comme étant non joignable est un paramètre de configuration, appelé période avant mise en isolement. Une fois que le noeud 1 désigne le noeud 2 comme isolé, le noeud 1 supprime la connaissance qu'il avait de la table du noeud 2. Le noeud 1 se considère donc désynchronisé par rapport au noeud 2, mais garde trace du noeud 2. Lorsqu'il émet un hello, le noeud 1 transmet également une valeur particulière de l'identifiant de version de table du noeud 2 qu'il a isolé. Cette valeur est appelée identifiant d'isolement. Ainsi, le noeud 2 ou un noeud parmi 3 ou 4 dans la grille de dissémination est en mesure de détecter cet isolement et de réagir.

Il faut noter que compte tenu du mécanisme décrit précédemment, les noeuds 1, 2, 3 et 4 ne sont pas synchronisés en ce qui concerne la transmission des hellos.

Avantageusement, le procédé selon la présente invention prévoit également qu'un mécanisme de codification numérique des couples canaux/flux produits par chacun des noeuds 1, 2, 3 et 4 puisse être mis en place. Dans l'exemple de la figure 1, cette codification dépend de chaque noeud, un même nom de canal/flux pouvant avoir deux codes différents pour deux noeuds distincts. Un objectif poursuivi est de faire en sorte que la charge utile disséminée dans la grille utilise ces codes en lieu et place des noms de canaux/flux pour minimiser les ressources réseaux nécessaires. Les codes numériques sont concis. Un code comporte un masque constitué d'un identifiant de noeud sur n bits où n est un nombre entier qui est fonction du logarithme en base 2 du nombre de noeuds déployables. Un code comporte également un compteur de canaux/flux sur p bits, où p est un nombre entier qui est fonction du logarithme en base 2 du nombre de canaux/flux possibles dans tout le système. Les codes ainsi générés sont échangés entre les noeuds 1, 2, 3 et 4 de la grille de dissémination. Ils permettent avantageusement de minimiser les ressources en bande passante utilisées dans la grille, que ce soit par exemple pour représenter les tables de routage locales et les évolutions qui leur sont apportées dans les messages de synchronisation selon la présente invention, ou que ce soit par exemple pour l'acheminement de la charge utile en remplaçant les noms de canaux/flux des entêtes par le code correspondant. Ainsi, un noeud parmi 1, 2 3 et 4 qui reçoit une charge utile utilisant un tel code est en mesure d'identifier le canal/flux associé. L'entretien des tables de codes s'insère dans les mêmes mécanismes que l'entretien des noms de canaux/flux produits et consommés par les noeuds. Les hellos contiennent ces codes, un code attribué par un noeud est également versionné.

Avantageusement, les codes numériques attribués aux canaux/flux produits par un noeud parmi 1, 2 3 et 4 peuvent être rémanents, c'est-à-dire que le code peut continuer à exister même s'il n'y a plus de productions pour le canal/flux associé sur le noeud. La rémanence est bornée dans le temps, la durée de rémanence étant un paramètre de configuration. Au terme de cette durée de rémanence, le code peut être réutilisé. Un objectif poursuivi est de minimiser le nombre p. La rémanence permet également, après une période d'amorçage du système, de limiter l'entretien des codes à la transmission des identifiants de version de ces codes entre les noeuds 1, 2, 3 et 4. L'attribution d'un code à un canal/flux est réalisée lors de la première déclaration de production pour ce canal/flux.

Un mécanisme de protection en cas de dimensionnement erroné peut être mis en place, les canaux/flux existant au-delà de 2 puissance p n'étant pas codés si le nombre p choisi n'est pas suffisamment grand.

Lors de l'attribution d'un code, un code non encore utilisé ou le code qui n'a pas été utilisé depuis le plus longtemps est choisi. Afin de protéger le système de dissémination, un code déjà utilisé n'est ré-utilisé que si le temps écoulé depuis sa libération est supérieur au temps à partir duquel un noeud considère un autre noeud comme isolé, plus une marge d'erreur. Un objectif poursuivi est de faire en sorte qu'un noeud distant n'utilise pas un code obsolète, par exemple le même code pour un canal/flux différent.

D'autres optimisations du mécanisme de codification peuvent être envisagées. Par exemple, dans la mesure où les codes numériques attribués aux canaux/flux évoluent peu avec le temps, ceci notamment grâce au mécanisme de rémanence et du fait que la liste des canaux/flux est bornée, les hellos cycliques peuvent omettre de porter à chacun des cycles l'identifiant de version de la table locale des codes. Cependant, cette possibilité n'est par exemple offerte au noeud 1 que si le noeud 1 voit les noeuds 2, 3 et 4 comme synchronisés. Le nombre de cycles où la table locale des codes peut être omise peut constituer un paramètre de configuration. Une autre optimisation du mécanisme de codification peut consister pour un noeud, lorsqu'il transmet le contenu de sa table locale des codes, à ne transmettre pour chaque code que les p bits identifiant le canal/flux, l'autre partie du code étant invariante puisqu'elle elle est attachée au noeud.

Le procédé selon la présente invention prévoit également que la codification peut être définie de manière permanente en usine ou ultérieurement par le gestionnaire du réseau. Dans ce cas, il n'est pas nécessaire que les codes soient transportés par la signalisation. Un but poursuivi est de permettre de déployer une grille de dissémination sur des réseaux très contraints où l'entretien des codes est incompatible des bandes passantes disponibles.

Il faut noter que le noeud 1 par exemple n'utilise le code attribué à un canal/flux que s'il est certain que les noeuds 2, 3 et 4 le connaissent. Un paramètre de configuration peut permettre de déterminer si la codification est utilisée sur détection de nouveaux noeuds, Il est également à noter qu'un noeud peut ne pas percevoir l'ensemble des noeuds effectivement présents dans la grille, notamment en cas de fusion de grille en cours ou en cas de noeud en cours d'entrée dans la grille. Dans ce cas, un noeud qui reçoit un message porteur d'un code inconnu ignore le message.

Comme explicité précédemment, le procédé selon la présente invention combine notamment le mécanisme de hellos et le mécanisme de versionnement des tables de routage afin de les prolonger en un mécanisme global de coopération entre les noeuds. Le mécanisme global de coopération entre les noeuds tient d'abord aux hellos cycliques et à leur contenu, le mécanisme de base des hellos ayant été détaillé précédemment. Le procédé selon la présente invention peut avantageusement enrichir ce mécanisme en permettant au noeud 1 d'émettre des hellos cycliquement vers une liste de noeuds destinataires obligatoires et vers une liste de noeuds destinataires optionnels. Avantageusement, la liste de noeuds destinataires obligatoires peut être constituée par les noeuds parmi 2, 3 et 4 qui coopèrent de manière rapprochée avec le noeud 1, par exemple parce-qu'ils sont rattachés à un même sous réseau 16 de communication de type UHF que le noeud 1, ou à un même sous réseau 17 de type VHF, ou à un même sous réseau 18 de type HF ou encore à un même LAN 19. Dans un groupe, seuls certains noeuds coopèrent avec d'autres groupes. Par exemple, la liste de noeuds destinataires optionnels peut être le groupe des noeuds.

Cette possibilité peut être fournie sous la forme de paramètres de configuration ou déterminée par un module logiciel embarqué dans le noeud 1 si l'on considère l'exemple précédent. Dans le cas où un module logiciel est utilisé, celui-ci peut être fourni par une entité d'administration en charge du déploiement de la grille de dissémination. La mise en place d'un module logiciel est plus complexe que le paramétrage, mais elle offre une flexibilité plus importante. Par exemple, un module logiciel peut offrir la possibilité d'utiliser des technologies propriétaires pour réaliser des dialogues avec une application de gestion. En l'absence totale de paramétrage, la grille peut mettre en place une stratégie par défaut de « round-robin » sur les noeuds selon l'expression anglo-saxonne, en choisissant lors de chaque cycle un nombre de noeuds dans le groupe obligatoire qui est fonction du nombre de noeuds connus. Par exemple, ce nombre peut être la moitié des noeuds jusqu'à 10 noeuds et la racine carrée du nombre de noeuds au-delà.

Par ailleurs, le noeud 1 est par exemple autorisé à ne pas transmettre dans ses hellos cycliques l'ensemble des identifiants des tables de routage apprises, mais uniquement un sous-ensemble de celui-ci. Le module logiciel embarqué dans le noeud 1 peut être en charge de déterminer la taille de ce sous-ensemble et les identifiants transmis. Par exemple, le module logiciel peut choisir de fournir les identifiants de 5% des noeuds connus. Il peut aussi choisir les noeuds qui ont émis des hellos le plus récemment. Le module logiciel peut utiliser des informations de dimensionnement connues du noeud 1, comme par exemple la bande passante disponible en sortie, et intégrer le facteur temporel dans son choix. L'algorithme mis en place permet au minimum au noeud 1 de déterminer, à partir de l'ensemble des hellos reçus, s'il est synchronisé avec l'ensemble des autres noeuds de la grille. Une stratégie par défaut peut consister à transmettre la table apprise du plus « vieux noeud connu et la table apprise du plus « jeune » noeud connu.

Le mécanisme global de coopération entre les noeuds que propose notamment le procédé selon la présente invention tient ensuite aux tables de routages versionnées apprises des autres noeuds, qui permettent notamment une certaine tolérance aux fautes. Ce point a déjà été énoncé précédemment. En effet, les hellos reçus par un noeud portent des identifiants de version de tables de routage d'autres noeuds. Par conséquent, plusieurs situations peuvent se présenter.

Une première situation correspond au cas où le noeud 1 par exemple constate sa désynchronisation. Par exemple, il détecte qu'il ne possède pas la version à jour de la table de routage du noeud 2 parce qu'il reçoit un hello du noeud 3 qui porte un identifiant de version postérieure de la table du noeud 2. Le noeud 1 peut donc envoyer au noeud 3 une demande de re-synchronisation concernant la table de routage du noeud 2.

Une deuxième situation correspond au cas où le noeud 1 par exemple constate la désynchronisation entre les noeuds 2 et 3 avec lesquels il coopère. En effet, sur réception des hellos venant des noeuds 2 et 3, le noeud 1 peut identifier des désynchronisations de table de routage entre les noeuds 2 et 3. Le noeud 1 peut alors engager une procédure de resynchronisation des noeuds 2 et 3. Outre la détection des désynchronisations par des noeuds tiers, la coopération entre les noeuds est basée sur le fait qu'un noeud coopérant peut transmettre à un noeud désynchronisé le contenu de sa table de routage pour permettre la re-synchronisation.

Pour de multiples raisons, le procédé selon la présente invention prend préférentiellement en compte cette deuxième situation, notamment parce qu'elle offre la possibilité pour le noeud qui détecte la désynchronisation de re-synchroniser plusieurs noeuds en positionnant par exemple comme destinataire optionnel le groupe des noeuds. Elle correspond également à la volonté de conserver un mode de resynchronisation proche de celui du mécanisme classique des hellos.

Pour cela, sur réception par le noeud 1 d'un hello du noeud 2 avec lequel il coopère, si le noeud 1 détecte que le noeud 2 ne possède pas la bonne version de la table de routage du noeud 3, alors le noeud 1 arme une temporisation pour attendre d'autres hellos qui pourraient éventuellement indiquer que le noeud 2 est à jour. En effet, il est possible que le noeud 4 ait constaté la même désynchronisation et que le noeud 4 ait déjà engagé une re-synchronisation du noeud 2. Il est également possible que deux autres noeuds, non illustrés sur la figure 1, aient engagé une re-synchronisation concernant la table de routage locale du noeud 2 et que le noeud 3 ait bénéficié de la re-synchronisation via le groupe en destinataire optionnel, car le noeud 3 était situé sur le chemin entre lesdits deux autres noeuds. Il est également possible que le noeud 1 soit lui-même en retard sans qu'il le sache. Il est également possible que le hello reçu indiquant une désynchronisation ne fournisse pas le dernier état connu du noeud 2 relativement au noeud 3. Enfin, il est également possible que les noeuds 2 et 3 aient eux-mêmes effectué un hello de re-synchronisation, car les destinataires de hellos peuvent évoluer dans le temps.

Au terme de la durée de temporisation, si aucun hello n'indique que le noeud 2 est synchronisé avec le noeud 3, le noeud 1 envoie un hello de re-synchronisation du noeud 2 avec le contenu de la table de routage qu'il possède pour le noeud 3. Le destinataire obligatoire du hello est le noeud 2. Dans le présent exemple de réalisation, le groupe des noeuds est destinataire optionnel.

Le procédé selon la présente invention propose d'enrichir encore cette stratégie. En effet, le noeud 1 peut détecter plusieurs désynchronisations du noeud 2 grâce au premier hello reçu qui a déclenché l'armement de la temporisation et grâce à l'ensemble des hellos reçus jusqu'au terme de la durée de temporisation. Dans ce cas, le noeud 1 peut engager une re-synchronisation du noeud 2 pour l'ensemble des désynchronisations détectées. Il faut noter que, pour de multiples raisons, le noeud 1 n'est autorisé à armer qu'un nombre limité de temporisations en même temps. D'une part, ces raisons sont liées à la bande passante nécessaire aux re-synchronisations. D'autre part, ces raisons sont liées au fait que le groupe qui est destinataire optionnel du hello peut résoudre certaines des désynchronisations constatées, notamment quand les désynchronisations portent sur les mêmes tables de routage. Le nombre maximum de temporisations peut être un paramètre de configuration. Après avoir effectué la re-synchronisation du noeud 2, le noeud 1 privilégie des re-synchronisations pour d'autres noeuds, tout en se protégeant de multiples re-synchronisations effectuées dans des temps réduits. Le nombre maximum de re-synchronisations possibles pour une période donnée peut être un paramètre de configuration. Le nombre de re-synchronisations possibles pour un même noeud et pour une période donnée peut également être un paramètre de configuration. Le procédé selon la présente invention peut par ailleurs prévoir de passer outre cette limite si la désynchronisation est persistante, à la condition que les hellos envoyés permettent la resynchronisation. Afin de préserver ses ressources, le noeud 1 par exemple peut n'armer une temporisation que si une durée suffisamment importante s'est écoulée depuis la dernière synchronisation effectuée, cette durée pouvant être un paramètre de configuration.

Lorsque des groupes de noeuds qui coopèrent ont été définis, le noeud 1 peut par exemple privilégier les re-synchronisations avec les noeuds avec lesquels ils coopèrent. Dans ce cas, afin de ne pas générer de famine de re-synchronisation du groupe et de ses liens avec les autres groupes, le nombre maximum de re-synchronisations possibles pour une période donnée est décomposé en deux valeurs. Une première valeur est applicable au groupe et une deuxième valeur est applicable aux noeuds hors groupe. Si plusieurs temporisations ont été armées, celles qui correspondent à des re-synchronisations prioritaires sont privilégiées. De plus, le noeud 1 par exemple ne peut engager qu'un nombre limité de re-synchronisations au même moment, ce nombre pouvant être un paramètre de configuration. De la plus importante à la plus faible, les priorités de re-synchronisation appliquées par le noeud 1 par exemple sont comme suit. Tout d'abord, le noeud 1 peut privilégier les re-synchronisations avec les noeuds avec lesquels il est en coopération étroite pour le même groupe. Ensuite viennent les re-synchronisations avec les noeuds du même groupe. Puis viennent les re-synchronisations avec les noeuds avec lesquels le noeud 1 est en coopération étroite pour d'autres groupes. Enfin, les re-synchronisations avec tous les autres noeuds sont considérées en dernier lieu.

Par ailleurs, afin de préserver la ressource en bande passante d'un noeud, il peut être choisi que ce noeud n'engage de re-synchronisations que s'il constate une désynchronisation persistante pour un même noeud. Ce paramétrage peut constituer un paramètre de configuration. La tentative de re-synchronisation du noeud est stoppée si elle n'a aucun effet.

Dans le cas où de nombreux noeuds sont découverts simultanément, c'est-à-dire que la grille était auparavant scindée, il convient d'éviter le déclenchement d'une avalanche de synchronisations au moment de la fusion. Pour cela, le procédé selon la présente invention propose de n'activer les mécanismes de synchronisation hors cycle qu'après une période pendant laquelle les hellos cycliques ont eu la possibilité de re-synchroniser l'ensemble des noeuds. La période d'attente est fonction du nombre de nouveaux noeuds qui ont été découverts.

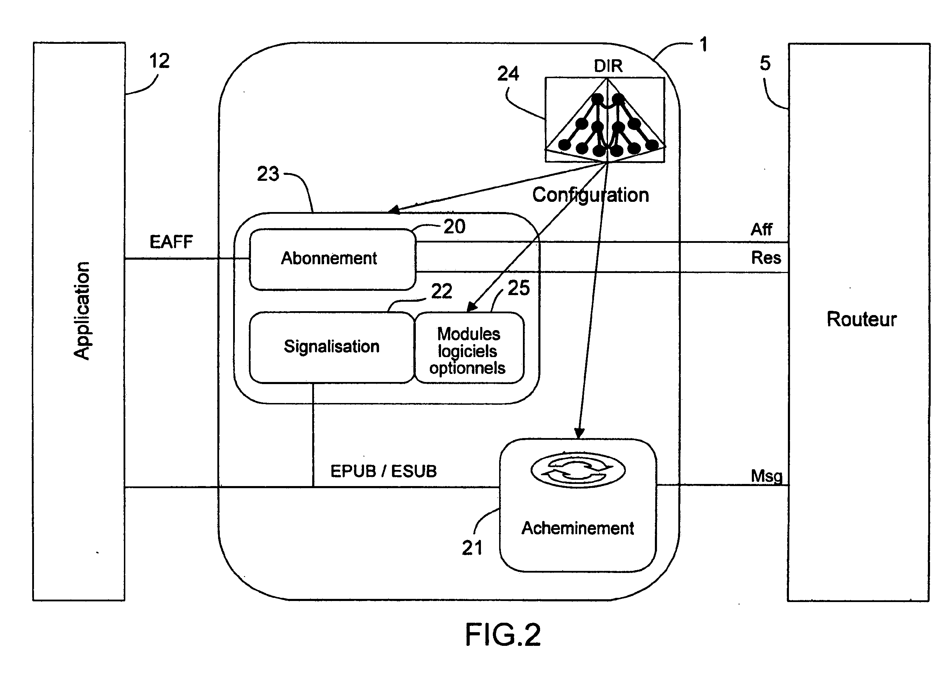

La figure 2 illustre par un diagramme un exemple de structure du noeud de dissémination 1 permettant de mettre en oeuvre le procédé selon la présente invention.

Pour son administration, le noeud de dissémination 1 peut comporter une interface d'administration 24 pour ajuster les paramètres de configuration du procédé de signalisation selon l'invention. Le noeud de dissémination 1 peut comporter un module 21 d'acheminement ayant la fonction principale de recevoir les publications locales envoyées par les applications et les publications distantes reçues via le routeur de messages 5. Le module 21 a également la fonction de déterminer quelles sont les applications locales et quelles sont les noeuds distants intéressés par ces applications. Un module d'intelligence 23 peut comporter deux sous-modules. Un sous-module 22 peut gérer le procédé de signalisation selon l'invention. Un sous-module 20 peut gérer les abonnements de l'application 12 à des publications ou des souscriptions. Le module d'intelligence 23 peut également comporter un bloc 25 regroupant des modules logiciels optionnels. Une première interface EAFF peut permettre à l'application 12 de déclarer des publications ou des souscriptions. Une deuxième interface EPUB peut permettre à l'application 12 de publier sur un nom de canal/flux sur lequel elle s'est préalablement déclarée productrice. Une troisième interface ESUB peut permettre à l'application 12 de recevoir des publications sur un nom de canal/flux sur lequel elle a préalablement déclaré des souscriptions. Le noeud de dissémination 1 peut utiliser la technique du « bootstrapping » selon l'expression anglo-saxonne pour véhiculer la signalisation en interne via une interface ISIG non illustrée sur la figure 2. Les modules d'intelligence des différents noeuds déployés, identiques au module 23, s'échangent la signalisation. Par exemple, pour véhiculer cette signalisation, le module d'intelligence 23 peut utiliser des noms de canaux/flux bien définis et se comporter comme une application utilisatrice du réseau de dissémination. Ainsi, il peut profiter de tous les mécanismes mis en place dans les couches plus basses. Le module d'intelligence 23 peut utiliser les interfaces EPUB et ESUB pour faire transiter les messages de signalisation venant de l'interface ISIG.

Le module d'intelligence 23 peut interagir avec le routeur de messages 5 grâce à une interface Aff, notamment pour enregistrer le noeud 1 en tant qu'utilisateur de la couche de distribution des messages, ainsi que pour inscrire le noeud 1 dans les groupes prédéfinis pour la signalisation ou dynamiquement négociés pour le transit de charge utile. Le module intelligence 23 peut également interagir avec le routeur de messages 5 grâce à une interface Res, notamment pour demander l'allocation de ressources en bande passante pour un profil de publication donné sur un nom de canal/flux, ainsi que pour soumettre une exigence de latence pour un profil de souscription donné sur un nom de canal/flux. Le module d'acheminement 21 peut interagir avec le routeur de messages 5 grâce à une interface Msg, notamment pour envoyer les messages de charge utile et de signalisation à destination des noeuds de dissémination distants intéressés parmi 2, 3 et 4, ainsi que pour recevoir les messages de charge utile et de signalisation pour le noeud 1 envoyés par des noeuds de dissémination distants parmi 2, 3 et 4.

### Autres avantages :

Les avantages de la présente invention par rapport à RTPS sont notamment la tolérance aux fautes, la capacité de passer à l'échelle des réseaux étendus, la détection rapide des désynchronisations et la limitation de la quantité de signalisation échangée. De plus, RTPS n'est déployable que sur des couches de transport répondant à des contraintes assez lourdes en terme de format d'adresse et d'utilisation de ports, comme UDP/IP. Le procédé selon la présente invention a encore pour principaux avantages qu'il permet de minimiser la bande passante nécessaire à l'entretien des tables de routage. Dans un cas nominal où le réseau est stable et où les informations de routage évoluent peu, la signalisation émise est réduite à son minimum, les hellos étant émis avec des périodes longues et ne contenant que des identifiants de versions. Toutefois, le système reste réactif dans la mesure où la déclaration de nouvelles productions/consommations sur un noeud peut engager un hello immédiat. La coopération entre les noeuds autorise alors des temps de synchronisation réduits. Egalement, la mise à disposition de nombreux paramètres de configuration permet d'ajuster les mécanismes du procédé selon la présente invention en fonction des besoins et du déploiement.

## Revendications

1. Procédé permettant de maintenir à jour les tables de routage des noeuds (1, 2, 3, 4) d'un réseau de dissémination instable, les noeuds rejoignant ou quittant ce réseau de manière imprévisible, **caractérisé en ce qu'**un noeud (1) :
- envoie périodiquement un message de synchronisation à tous les autres noeuds distants (2, 3, et 4), la période d'envoi d'un message de synchronisation à tous les autres noeuds distants (2, 3 et 4) augmentant lorsque le réseau tend à se stabiliser, les noeuds distants étant tous synchronisés et la table de routage locale n'évoluant pas ;
- envoie exceptionnellement un message de synchronisation à un autre noeud distant (2, 3 ou 4) en particulier lorsque ledit autre noeud est désynchronisé.

2. Procédé selon la revendication 1, **caractérisé en ce que** :
- un message de synchronisation contient des informations permettant de déduire la version la plus récente de la table locale du noeud (1) ainsi que des informations permettant de déduire les versions des tables des autres noeuds distants (2, 3 et 4) connues par le noeud (1) ;
- un message de synchronisation est envoyé exceptionnellement à un autre noeud distant (2, 3 ou 4) lorsque ledit autre noeud a précédemment envoyé un message de synchronisation permettant de déduire qu'il ne connaissait pas la version la plus récente de la table locale du noeud (1).

3. Procédé selon la revendication 1, **caractérisé en ce que**, avant d'envoyer exceptionnellement un message de synchronisation à un autre noeud distant (2, 3 ou 4), le noeud (1) attend un délai donné après réception du message de synchronisation envoyé par ledit autre noeud (2, 3 ou 4) et/ou attend de recevoir un message confirmant la désynchronisation.

4. Procédé selon la revendication 1, **caractérisé en ce que** le réseau est hétérogène, les noeuds utilisant des moyens de communication différents.

5. Procédé selon la revendication 1, **caractérisé en ce que**, pour envoyer exceptionnellement un message de synchronisation à un autre noeud distant (2, 3 ou 4), un noeud (1) :
- envoie le message de synchronisation à des groupes de noeuds distants obligatoires dont ledit autre noeud (2, 3 ou 4) fait partie, tous les noeuds desdits groupes recevant obligatoirement le message de synchronisation ;
- envoie le message de synchronisation à un groupe de noeuds distants optionnels, un noeud dudit groupe ne recevant le message de synchronisation que s'il se trouve sur un chemin menant à un noeud obligatoire.

6. Procédé selon la revendication 1, **caractérisé en ce que**:
- un noeud rejoignant le réseau s'affilie à un groupe formé par tous les noeuds du réseau et s'affilie à des groupes formés par les noeuds participant à un même sous réseau (16, 17, 18, 19) que lui ; ou
- un noeud quittant le réseau se désaffilie du groupe formé par tous les noeuds du réseau et se désaffilie des groupes formés par les noeuds participant à un même sous réseau (16, 17, 18, 19) que lui.

7. Procédé selon la revendication 5 et 6, **caractérisé en ce que** :
- les groupes de noeuds distants obligatoires sont les groupes formés par les noeuds participant à un même sous réseau (16, 17, 18, 19) que le noeud ;
- le groupe de noeuds distants optionnels est le groupe formé par tous les noeuds du réseau.

8. Procédé selon la revendication 1, **caractérisé en ce que** le message de synchronisation envoyé périodiquement à tous les autres noeuds distants contient (2, 3 et 4) :
- la table locale du noeud (1) accompagnée d'un numéro de version ;
- des identifiants des tables des autres noeuds distants (2, 3 et 4) connues par le noeud (1), accompagnés de numéros de versions.

9. Procédé selon la revendication 1, **caractérisé en ce que** le message de synchronisation envoyé exceptionnellement à un autre noeud distant (2, 3 ou 4) contient :
- un numéro de version de la table locale du noeud (1) ;
- des informations permettant de déduire, à partir de la version de la table locale du noeud (1) dont le numéro est contenu dans le message, la version la plus récente de la table locale du noeud (1).

10. Procédé selon la revendication 9, **caractérisé en ce que** le numéro de version de la table locale du noeud (1) est celui de la version précédant la version la plus récente.

11. Procédé selon la revendication 1, **caractérisé en ce que** les informations concernant les tables de routage contenues dans un message de synchronisation sont codées numériquement, de sorte à diminuer la quantité totale d'information formant le message.

12. Procédé selon la revendication 11, **caractérisé en ce que** les tables de routage contiennent des informations de routage représentées à partir de canaux, chaque canal étant la racine d'une arborescence de flux.

13. Procédé selon la revendication 1, **caractérisé en ce que** les messages de synchronisation sont encodés conformément à la norme PER ASN1.

14. Procédé selon la revendication 11, **caractérisé en ce que** la codification numérique est rémanente pendant une durée donnée, de sorte à limiter les créations / suppressions de codes malgré l'instabilité du réseau.

15. Procédé selon la revendication 11, **caractérisé en ce que** la codification numérique est prédéfinie.

16. Procédé selon la revendication 11, **caractérisé en ce que** tous les messages transitant sur le réseau ont leurs tables de routage qui contiennent des informations de routage codées sous la même forme que dans les messages de synchronisation, de sorte a diminuer la quantité totale d'information formant les messages.

## Claims

1. A process for continually updating the routing tables of nodes (1, 2, 3, 4) in an unstable dissemination network, the nodes joining or leaving this network in an unpredictable manner, **characterised in that** a node (1):
- periodically sends a synchronisation message to all of the other remote nodes (2, 3 and 4), the period for sending a synchronisation message to all of the other remote nodes (2, 3 and 4) increasing when the network tends to stabilise itself, all of the remote nodes being synchronised and the local routing table remaining unchanged;
- exceptionally sends a synchronisation message to another remote node (2, 3 or 4), particularly when said other node is desynchronised.

2. The process according to claim 1, **characterised in that**:
- a synchronisation message contains information for deriving the most recent version of the local table of node (1), as well as information for allowing to derive the versions of the tables of the other remote nodes (2, 3 and 4) which are known by the node (1);
- a synchronisation message is exceptionally sent to another remote node (2, 3 or 4) when said other node has previously sent a synchronisation message for deriving that said other node did not know the most recent version of the local table of node (1).

3. The process according to claim 1, **characterised in that**, before exceptionally sending a synchronisation message to another remote node (2, 3 or 4), the node (1) waits for a predetermined time following receipt of the synchronisation message sent by said other node (2, 3 or 4) and/or waits to receive a message confirming desynchronisation.

4. The process according to claim 1, **characterised in that** the network is heterogeneous, the nodes using different communication means.

5. The process according to claim 1, **characterised in that** in order to exceptionally send a synchronisation message to another remote node (2, 3 or 4), a node (1):
- sends the synchronisation message to groups of mandatory remote nodes to which said other node (2, 3 or 4) belongs, all of the nodes of said groups necessarily receiving the synchronisation message;
- sends the synchronisation message to a group of optional remote nodes, a node from said group only receiving the desynchronisation message if it is found on a path leading to a compulsory node.

6. The process according to claim 1, **characterised in that**:
- a node joining the network is affiliated to a group formed by all of the nodes of the network and is affiliated to the groups formed by the nodes belonging to the same sub network (16, 17, 18, 19) as said node; or
- a node leaving the network is unaffiliated from the group formed by all of the nodes of the network and is unaffiliated from the groups formed by the nodes belonging to the same sub network (16, 17, 18, 19) as said node.

7. The process according to claims 5 and 6, **characterised in that**:
- the groups of mandatory remote nodes are the groups formed by the nodes belonging to the same sub network (16, 17, 18, 19) as the node;
- the group of optional remote nodes is the group formed by all of the nodes of the network.

8. The process according to claim 1, **characterised in that** the synchronisation message which is periodically sent to all of the other remote nodes (2, 3 and 4) contains:
- the local table of node (1) accompanied by a version number;
- identifiers of the tables of the other remote nodes (2, 3 and 4) known by the node (1), accompanied by version numbers.

9. The process according to claim 1, **characterised in that** the synchronisation message which is exceptionally sent to another remote node (2, 3 or 4) contains:
- a version number for the local table of node (1);
- information for deriving, based on the version of the local table of node (1), the number of which is contained in the message, the most recent version of the local table of node (1).

10. The process according to claim 9, **characterised in that** the version number of the local table of node (1) is that of the version preceding the most recent version.

11. The process according to claim 1, **characterised in that** the information relating to the routing tables contained in a synchronisation message is digitally coded so as to reduce the total quantity of information forming the message.

12. The process according to claim 11, **characterised in that** the routing tables contain routing information which is represented based on channels, each channel being the root of a flow tree.

13. The process according to claim 1, **characterised in that** the synchronisation messages are encoded in accordance with standard PER ASN1.

14. The process according to claim 11, **characterised in that** the digital coding is residual for a predetermined period so as to limit the creation/deletion of codes despite the instability of the network.

15. The process according to claim 11, **characterised in that** the digital coding is predefined.

16. The process according to claim 11, **characterised in that** all of the messages passing through the network have their own routing tables which contain routing information which is encoded in the same form as the synchronisation messages so as to reduce the total quantity of information forming the messages.

## Patentansprüche

1. Verfahren zum kontinuierlichen Aktualisieren der Routing-Tabellen von Knoten (1, 2, 3, 4) in einem instabilen Disseminationsnetzwerk, wobei sich die Knoten auf unvorhersehbare Weise an dieses Netzwerk an- oder davon abschalten, **dadurch gekennzeichnet, dass** ein Knoten (1):
- periodisch eine Synchronisationsnachricht zu allen anderen Fernknoten (2, 3 und 4) sendet, wobei die Periode des Sendens einer Synchronisationsnachricht zu allen anderen Fernknoten (2, 3 und 4) zunimmt, wenn sich das Netzwerk zu stabilisieren neigt, wobei alle Fernknoten synchronisiert werden und die lokale Routing-Tabelle unverändert bleibt;
- ausnahmsweise eine Synchronisationsnachricht zu einem anderen Fernknoten (2, 3 oder 4) sendet, besonders dann, wenn der andere Knoten desynchronisiert ist.

2. Verfahren nach Anspruch 1, **dadurch gekennzeichnet, dass**:
- eine Synchronisationsnachricht Informationen zum Ableiten der neuesten Version der lokalen Tabelle des Knotens (1) sowie Informationen zum Ableiten der Versionen der Tabellen der anderen Fernknoten (2, 3 und 4) enthält, die der Knoten (1) kennt;
- eine Synchronisationsnachricht ausnahmsweise zu einem anderen Fernknoten (2, 3 oder 4) gesendet wird, wenn der andere Knoten zuvor eine Synchronisationsnachricht gesendet hat, mit der abgeleitet werden kann, dass dieser andere Knoten die neueste Version der lokalen Tabelle des Knotens (1) nicht gekannt hat.

3. Verfahren nach Anspruch 1, **dadurch gekennzeichnet, dass** vor dem ausnahmsweisen Senden einer Synchronisationsnachricht zu einem anderen Fernknoten (2, 3 oder 4) der Knoten (1) eine bestimmte Zeit nach dem Empfang der von dem anderen Knoten (2, 3, oder 4) gesendeten Synchronisationsnachricht wartet und/oder auf den Empfang einer eine Desynchronisation bestätigenden Nachricht wartet.

4. Verfahren nach Anspruch 1, **dadurch gekennzeichnet, dass** das Netzwerk heterogen ist, wobei die Knoten unterschiedliche Kommunikationsmittel benutzen.

5. Verfahren nach Anspruch 1, **dadurch gekennzeichnet, dass** zum ausnahmsweisen Senden einer Synchronisationsnachricht zu einem anderen Fernknoten (2, 3 oder 4) ein Knoten (1):
- die Synchronisationsnachricht zu Gruppen von obligatorischen Fernknoten sendet, zu denen der andere Knoten (2, 3, oder 4) gehört, wobei alle Knoten dieser Gruppen unbedingt die Synchronisationsnachricht empfangen;
- die Synchronisationsnachricht zu einer Gruppe von optionalen Fernknoten sendet, wobei ein Knoten der Gruppe die Synchronisationsnachricht nur dann erhält, wenn sie sich auf einem Pfad befindet, der zu einem obligatorischen Knoten führt.

6. Verfahren nach Anspruch 1, **dadurch gekennzeichnet, dass**:
- ein sich an das Netzwerk anschaltender Knoten an eine Gruppe angegliedert wird, die von allen Knoten des Netzwerks gebildet wird, und an Gruppen angegliedert wird, die von den Knoten gebildet werden, die zum selben Subnetzwerk (16, 17, 18, 19) gehören wie der Knoten; oder
- ein sich vom Netzwerk abschaltender Knoten aus der Gruppe ausgegliedert wird, die von allen Knoten des Netzwerks gebildet wird, und aus den Gruppen ausgegliedert wird, die von den Knoten gebildet werden, die zum selben Subnetzwerk (16, 17, 18, 19) gehören wie der Knoten.

7. Verfahren nach Anspruch 5 and 6, **dadurch gekennzeichnet, dass**:
- die Gruppen von obligatorischen Fernknoten die Gruppen sind, die von Knoten gebildet werden, die zum selben Subnetzweork (16, 17, 18, 19) gehören wie der Knoten;
- die Gruppe von optionalen Fernknoten die Gruppe ist, die von allen Knoten des Netzwerks gebildet wird.

8. Verfahren nach Anspruch 1, **dadurch gekennzeichnet, dass** die Synchronisationsnachricht, die periodisch zu allen anderen Fernknoten (2, 3 und 4) gesendet wird, Folgendes beinhaltet:
- die lokale Tabelle des Knotens (1), begleitet von einer Versionsnummer;
- Kennungen der Tabellen der anderen Fernknoten (2, 3 und 4), die der Knoten (1) kennt, begleitet von Versionsnummern.

9. Verfahren nach Anspruch 1, **dadurch gekennzeichnet, dass** die Synchronisationsnachricht, die ausnahmsweise zu einem anderen Fernknoten (2, 3 oder 4) gesendet wird, Folgendes beinhaltet:
- eine Versionsnummer der lokalen Tabelle des Knotens (1);
- Informationen, anhand derer von der Version der lokalen Tabelle des Knotens (1), deren Nummer in der Nachricht enthalten ist, die neueste Version der lokalen Tabelle des Knotens (1) abgeleitet werden kann.

10. Verfahren nach Anspruch 9, **dadurch gekennzeichnet, dass** die Versionsnummer der lokalen Tabelle des Knotens (1) die der Version vor der neuesten Version ist.

11. Verfahren nach Anspruch 1, **dadurch gekennzeichnet, dass** die Informationen über die Routing-Tabellen, die in einer Synchronisationsnachricht enthalten sind, digital codiert werden, um die Gesamtmenge an die Nachricht bildenden Informationen zu reduzieren.

12. Verfahren nach Anspruch 11, **dadurch gekennzeichnet, dass** die Routing-Tabellen Routing-Informationen enthalten, die von Kanälen repräsentiert werden, wobei jeder Kanal die Wurzel eines Ablaufbaums ist.

13. Verfahren nach Anspruch 1, **dadurch gekennzeichnet, dass** die Synchronisationsnachrichten gemäß der Norm PER ASN1 codiert werden.

14. Verfahren nach Anspruch 11, **dadurch gekennzeichnet, dass** die digitale Codierung für eine bestimmte Periode übrig bleibt, um das Erzeugen/Löschen von Codes trotz der Instabilität des Netzwerks zu begrenzen.

15. Verfahren nach Anspruch 11, **dadurch gekennzeichnet, dass** die digitale Codierung vordefiniert ist.

16. Verfahren nach Anspruch 11, **dadurch gekennzeichnet, dass** alle über das Netzwerk gehenden Nachrichten ihre eigenen Routing-Tabellen haben, die Routing-Informationen enthalten, die in derselben Form codiert sind wie in den Synchronisationsnachrichten, um die Gesamtmenge an die Nachrichten bildenden Informationen zu reduzieren.
